# EUROPEAN PATENT APPLICATION

(11) **EP 1 612 484 A1**
(43) Date of publication of application: **04.01.2006**
(21) Application number: 05076446.3
(22) Date of filing: 22.06.2005
(51) Int. Cl.: F23L 3/00, F23L 13/02

(54) **Damper apparatus**

(30) Priority: 29.06.2004 SE 0401673
(71) Applicant: Gustavsson, Kenneth, 280 40 Skanes Fagerhult (SE)
(72) Inventor: Gustavsson, Kenneth, 280 40 Skanes Fagerhult (SE)
(74) Representative: Wallengren, Yngvar

(57) **Abstract**

An apparatus for governing the supplied air in a combustion boiler (7) includes a fan (6) with governable air flow. The air flow is led into the boiler (7) by the intermediary of conduit connections and nozzles (3). The nozzles (3) have dampers (9, 10) which move in relation to the generated air current. The dampers (9, 10) are coupled via a linkage to a spring (15) which operates opening of the dampers (9, 10) in response to the intensity of the air current flow. The air current is directed in that the dampers (9, 10) are displaceable in relation to one another with the aid of adjustment members (16, 17) and the linkage. The adjustment members are displaceable along slide bars (18).

## Description

### TECHNICAL FIELD

The present invention relates to an apparatus for the supply of a governable flow of combustion air to a boiler, and comprises a fan with governable flow, a conduit connection between the fan and a number of nozzle devices discharging in the interior of the boiler, the devices including at least one adjustable damper for governing the through flow area of the nozzle device, the position of the damper being controlled in response to the pressure generated by the fan in the nozzle device.

### BACKGROUND ART

In the combustion of solid fuels in a solid fuel fired boiler, it is only a small proportion of the combustion process proper that takes place in the fuel bed. The major proportion of the combustion takes place in the gaseous phase a distance from the fuel bed proper, which, by chemical breakdown, produces the combustible gases that are then combusted.

In order to sustain the combustion, the supply of air is naturally required, and this supply of air takes place primarily in the fuel bed, but also secondarily to that zone where combustion in the gaseous phase takes place. Often, the secondary supply of air takes place at several different sites in the combustion zone.

In order for the degree of efficiency in a boiler plant to be as high as possible, all fuel must be combusted, in other words combustion must be complete. In order to achieve complete combustion, a certain quantity of air is required for a given quantity of fuel, a stoichiometric air relationship. The ideal situation would be to cause the boiler to work at stiochiometric air relationship, but for several reasons this is not feasible. For example, it is impossible in practice to supply the exactly correct quantity of air on precisely the right occasion and to exactly the right place in the boiler. From this it follows that a certain surplus of air must be used in order to achieve complete combustion or at least almost complete combustion.

If the surplus of air is allowed to increase, this implies on the one hand that the combustion may be expected to be more complete, but, on the other hand, the degree of efficiency of the boiler is reduced since there then flows through the boiler an air current which is heated up and which departs via the chimney stack. As a result, the combustion heat will not benefit the boiler plant but will be exhausted as a loss via the flue gases.

Boilers that operate under varying loads naturally require air flows of different sizes depending on the current appearance of the boiler load.

A solution is previously known in the art where use is made of fixed nozzles for the supply of the secondary air in a solid fuel boiler. Via a suitable duct system, these nozzles are connected to a governable fan so that, as a result, the current flows through the nozzles can be governed on the basis of the governing of the fan.

For controlling the fan, use is made of a flue gas analysis where the oxygen content in the flue gases is taken as an input signal for controlling the fan. If the oxygen content in the flue gases increases, this is interpreted such that the air surplus is too great, for which reason the fan is stopped down so that the air supply is reduced. The converse applies if the oxygen content is too low, since there is then a risk of incomplete combustion.

A governing of the cycle as outlined above may function satisfactorily, at least if the boiler is at full load. If, on the other hand, the load of the boiler is reduced, i.e. the quantity of fuel supplied per unit of time is reduced, the quantity of air must also be reduced correspondingly. On throttling the air flow through the nozzles, the linear flow rate out from the nozzles will be reduced, for which reason the "cast length" of the nozzles is reduced so that, as a result, the secondary air arrives at the wrong place. In an extreme case, the flow rate may be so low that the supplied secondary air does not enter into the combustion zone, but is exhausted from the boiler plant without having taken part in any combustion and subsequently finds its way into the flue gases. As a result, the flue gases contain more oxygen with the result that the air supply is stopped down even further, with incomplete combustion as a result.

Apparatuses are also previously known in the art for the supply of secondary air to a solid fuel boiler plant where the nozzle devices have adjustable through flow areas. The nozzle devices are operated by servo motors which in turn are controlled by extensive and computerised control equipment which, int. al. employs as input signal the pressure in the nozzle device.

Granted, adjustable nozzle devices may reduce the problem in varying "cast length", but are expensive and complex and highly unreliable because of the environment in which they are employed. Thus, the immediate proximity around a boiler may be expected to display, on the one hand, extremely high temperatures, and on the other hand corrosive gases and dirt or grit in general.

In varying load in a boiler, it is common that the main combustion zone is located at different sites depending on what the current load situation is.

The above-outlined solutions involving fixed nozzles and involving adjustable nozzles cannot address this problem since they are constantly directed to the discharge air. There is thus a risk that the air arrives at the wrong place in the boiler when operational conditions change.

### PROBLEM STRUCTURE

The present invention has for its object to design the damper apparatus intimated by way of introduction so that it obviates the drawbacks in prior art technology. Thus, the present invention has for its object to design the damper apparatus so that it can discharge a varying air current without the linear flow rate out from the nozzle device varying appreciably with the flow. The present invention also has for its object to design the nozzle device such that it permits a redirection of the flow at the same time as the nozzle device displays a simple, robust mechanical construction which well withstands the severe environment which prevails in the immediate proximity around a boiler. Finally, the present invention also has for its object to obviate the requirement of complex, expensive computerised control systems and to permit simple retrofitting in an existing boiler plant.

### SOLUTION

The objects forming the basis of the present invention will be attained if the apparatus intimated by way of introduction is characterised in that the damper is directly affected by the pressure generated by the fan and that it is movable from a closed position under the action of this pressure against the action of a spring mechanism.

### BRIEF DESCRIPTION OF THE ACCOMPANYING DRAWINGS

The present invention will now be described in greater detail hereinbelow, with reference to the accompanying Drawings. In the accompanying Drawings:
- Fig. 1: shows a first embodiment of the apparatus according to the present invention where air is supplied via a vertical conduit connection to two nozzle devices which discharge in boiler;
- Fig. 2: shows in perspective a nozzle device, a conduit connection connected thereto and a spring mechanism;
- Fig. 3: is a vertical side elevation of the spring mechanism according to Fig. 2 in a neutral position where the air is discharged in line with the nozzle device;
- Fig. 4: is a view corresponding to that of Fig. 3 where the spring mechanism is located in a position with maximum opening of one of the dampers, the air discharged from the nozzle device being directed either upwards or downwards;
- Fig. 5: is a vertical section through the nozzle device according to Figs. 1 and 2 in the neutral position of the spring mechanism according to Fig. 3;
- Fig. 6: is a vertical section through the nozzle device where this is set for emitting a downwardly directed air current;
- Fig. 7: is a vertical section through the nozzle device, this being set for emitting an upwardly directed air current;
- Fig. 8: is a vertical section through the nozzle device, where this is, in comparison with Fig. 7, located in an open position for the upwardly directed discharge of air;
- Fig. 9: is an end elevation of the nozzle device seen from the inlet end in the open position;
- Fig. 10: is a vertical side elevation, partly cut away, of a second embodiment of the present invention, the nozzle device being closed and set for straight air current;
- Fig. 11: shows, in a view corresponding to that of Fig. 10, the nozzle device in the open position;
- Fig. 12: shows, in a view corresponding to that of Fig. 10, the nozzle device in the closed position and set for upwardly directed air current; and
- Fig. 13: shows the nozzle device according to Fig. 12 in the partly open position.

### DESCRIPTION OF PREFERRED EMBODIMENT

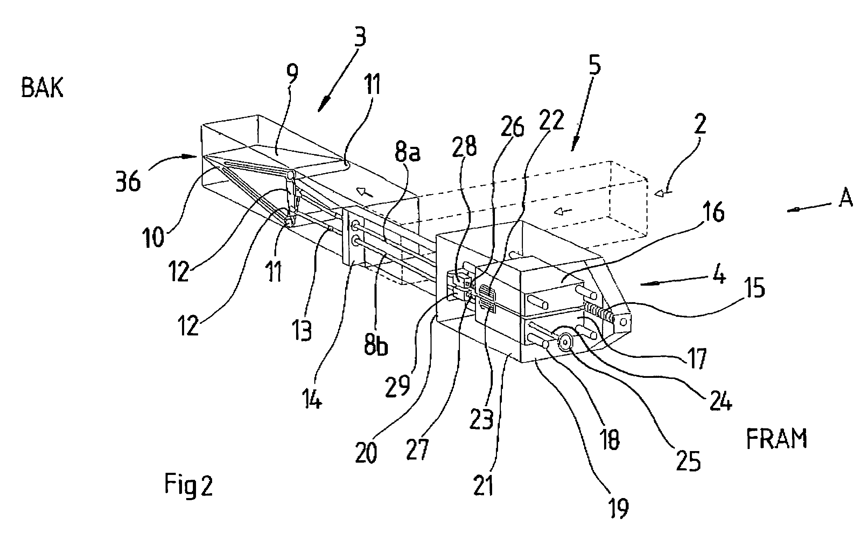

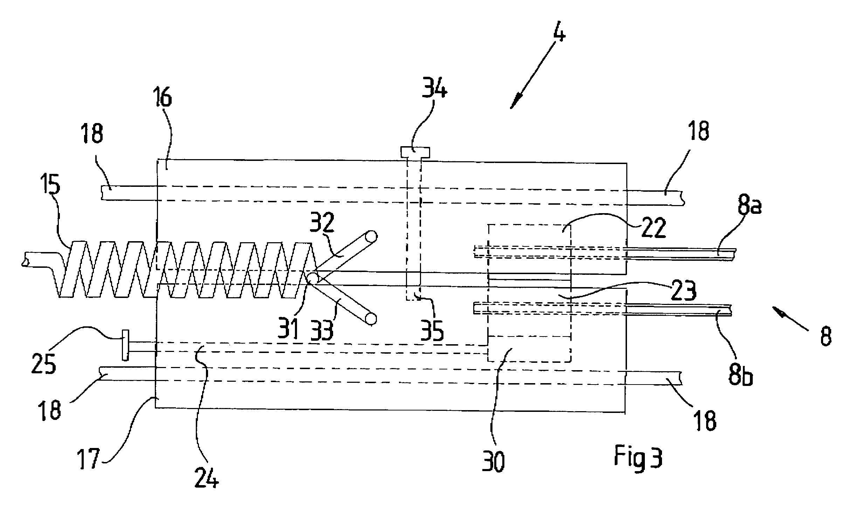

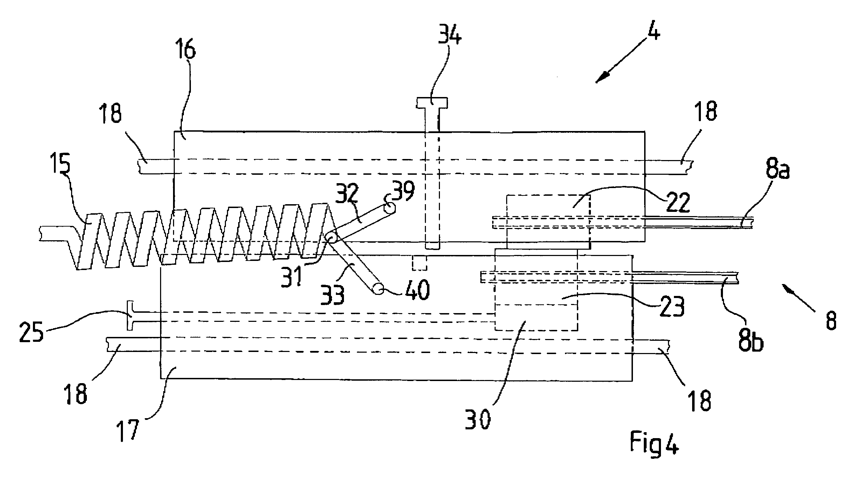

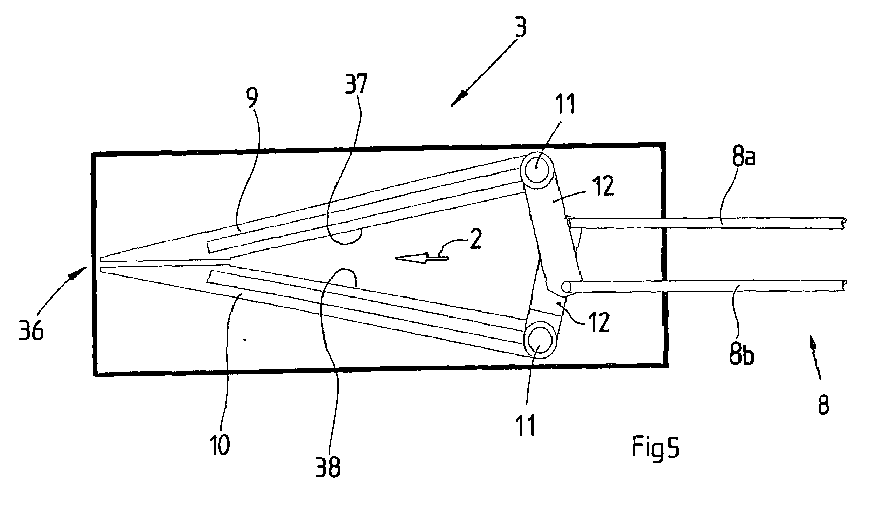

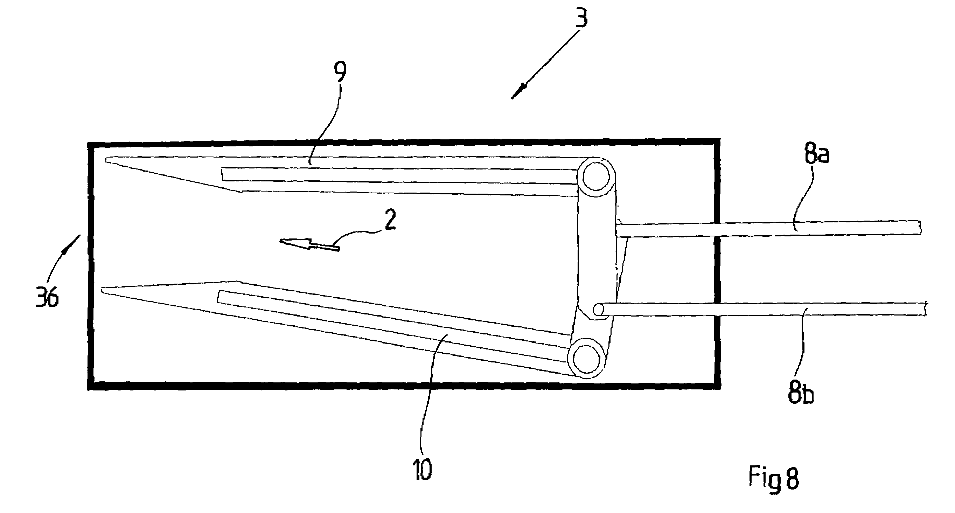

Regarding the accompanying Drawings, it might further be mentioned that Figs. 3 and 4 are mirror-reversed in relation to Figs. 5 to 8. This has its basis in the fact that Figs. 3 and 4 show the spring mechanism seen from the "rear" side in Fig. 2, i.e. in the direction of the arrow A.

In the following description, use will be made of positional indications such as "rear" and "front". The term 'rear end' of the nozzle device is taken to signify that end facing towards the boiler which is also the end facing away from the observer of Fig. 2. Analogously, the term 'front end' signifies that end of the apparatus according to the invention facing towards the observer of Fig. 2.

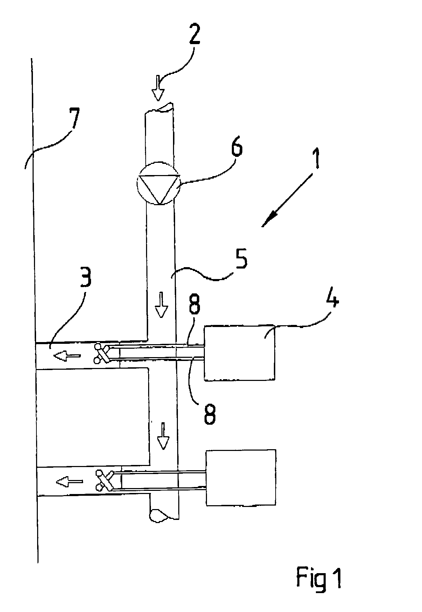

Fig. 1 shows, in side elevation, a first embodiment of the present invention. A device 1 for the supply of a current 2 of air consists of two mutually superposed nozzle devices 3, a spring mechanism 4 for each nozzle device, a conduit connection 5 that leads air from a fan 6 of governable flow type to both of the nozzle devices. The nozzle devices 3 discharge with their rear ends in a boiler 7 to which the air current 2 is supplied in order to sustain combustion ongoing in the boiler.

The embodiment according to Fig. 1 shows a vertically upstanding duct system with two levels of nozzle devices 3. However, the present invention also encompasses arrangements where the nozzle devices are placed side by side at the same level in the boiler 7 and where, consequently, the conduit connection 5 is horizontal.

Between each spring mechanism 4 and each nozzle device 3, a linkage 8 is disposed and provided with rods 8a and 8b displaceable in the longitudinal direction. With the aid of the linkage 8, the nozzle device may be operated so that the air current out from each nozzle device may adjusted in the vertical direction, but also such that the size of the current may be varied within broad limits without the linear flow rate out from the nozzle device being reduced to any appreciable degree in the event of low volume flows.

In Fig. 1, the nozzle device 3 is shown as mounted at right angles to a vertical boiler wall 7. It should be observed that it can also be mounted at any optional angle in relation to such a wall, including a sloping wall or even a boiler roof. In addition, it can be mounted at any position of rotation about its own longitudinal directional axis.

There will first be given a description of the regulation by the spring mechanism 4 of the volume flow into the boiler 7 without the linear current flow rate being appreciably affected by the volume flow. This description will be given with reference to Figs. 2, 3 and 5. Thereafter, a description of the possibilities of directing the discharged air in different directions will be given.

It will be apparent from Fig. 5 that the nozzle device 3 includes a duct section in which at least one, but preferably two dampers 9 and 10 are disposed. The upstream located ends of the dampers are disposed at opposing duct walls and each connected to its shaft 11. The shafts 11 are pivotal in the duct section and each has, on the outside thereof, a lever 12 which is connected to the above-mentioned longitudinally displaceable rods 8a and 8b. These rods are included in the above-mentioned linkage 8.

The downstream located ends of the dampers 9 and 10 are reciprocally movable in relation to one another by pivoting of the shafts 11. In Fig. 5, the damper apparatus is shown in a substantially closed position with a very narrow aperture 36.

When an air current, which is schematically illustrated by the arrow 2 in Fig. 5, enters into the duct section, it acts by its pressure on both of the mutually facing surfaces 37 and 38, respectively, of the dampers 9 and 10 so that a force is created for pivoting the dampers away from one another, i.e. in towards the two opposing walls in the duct section. In the linkage 8 is connected to a resistant spring force, the opening area between the dampers will become larger the greater the pressure, i.e. the greater the flow emitted by the fan 6. The opposite relationship naturally applies if the fan is stepped down to a slight flow so that thereby the pressure in the duct section also falls.

Since the size of the aperture 36 varies with the volume flow so that the size is reduced with reduced volume flow, it follows that the linear current flow rate out from the nozzle device 3 may be maintained largely unchanged even in the event of slight volume flows. As a result, the "cast length" of the nozzle device 3 will not vary appreciably with the volume flow.

Fig. 1 shows two nozzle devices 3 connected to the same conduit section 5 and the same fan 6. By giving both of the nozzle devices 3 different counteracting spring forces, it is possible to cause them to open at different points in time so that the one nozzle device is still closed while the other is open. The same possibility is also available in the embodiment illustrated in Fig. 2 where it may be assumed that several nozzle devices 3 are disposed in side-by-side relationship on the same level and connected to a common conduit connection 5.

Fig. 2 shows in perspective the apparatus according to the invention more completely, it being apparent that the conduit connection 5, which in this Figure is only shown via broken lines, is horizontal in extent. Like that described with reference to Fig. 1, the conduit connection 5 is connected to a fan (not shown in the Figure) with governable flow. How the flow of the fan is governed is immaterial to the present invention.

It will be apparent from the Figure that both of the rods 8a and 8b in the linkage have joints 13 at their rear ends in order to be able to accompany the pivotal movements which are executed by both of the levers 12. The rods 8a and 8b extend displaceably through a guide 14 and extend therefrom forwards into the spring mechanism 4 where, via adjustment members or blocks 16 and 17, they are connected to a spring 15 whose front end is secured in the casing in which the spring mechanism 4 is housed.

On flow regulation from the position of the dampers 9 and 10 illustrated in Fig. 5, both of the adjustment members 16 and 17 are to be considered as a rigid unit to which the two rods 8a and 8b are connected. This implies that when both of the adjustment members 16 and 17 move for altering the volume flow out from the nozzle device 3, they move synchronously, which also applies to both of the rods 8a and 8b. In such instance, the adjustment members 16 and 17 are displaceable along guides in the form of slide bars 18 which extend between rear and front walls 20 and 19, respectively, in that casing in which the spring mechanism 4 is housed. The casing also has a side wall 21.

Fig. 3 shows the two adjustment members 16 and 17 which, in the Figure, are slidable in a direction to right and left, i.e. in the longitudinal direction of the two rods 8a and 8b along the guides or slide bars 18. It will also be apparent from the Figure that the rear end of the spring 15 which, in Fig. 3, is the right-hand end, is connected via a stub shaft 31 to two arms 32 and 33 which are pivotally connected to the two adjustment members 16 and 17. The reason for this interconnection of the spring 15 and the two adjustment members will b described in greater detail hereinbelow.

In order to ensure the synchronous movements between the adjustment members 16 and 17, they are provided with a coupling 34 which will be described in greater detail hereinbelow, but which, in Fig. 3, is located in the locked position where the adjustment members are interconnected to form a rigid unit.

Thus far as the apparatus according to the present invention has been described above, it is only the governing or regulation function that has been considered. However, the present invention also encompasses a function for redirection of the discharged air current in a vertical direction or in a lateral direction if the entire apparatus according to the invention is turned through 90°. In order to attain such a redirection, the two adjustment members 16 and 17 should still be considered as rigidly interconnected and stationary.

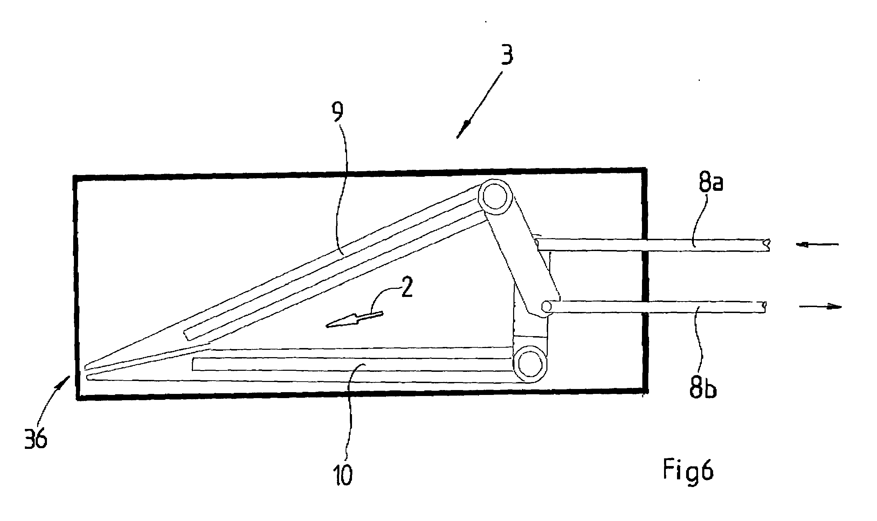

In a comparison between Figs. 5 and 6, it will be apparent that the upper displaceable rod 8a from the position illustrated in Fig. 5 to the position illustrated in Fig. 6 has been moved in a direction to the left in the Figure, i.e. rearwardly, while the lower rod 8b has been moved in a direction to the right, i.e. forwardly. This has been realised in that the anchorage of the two rods 8a and 8b in or connection to the two adjustment members 16 and 17, respectively, is adjustable in the longitudinal direction of the rods. In order to achieve this, the front ends of the rods 8a and 8b are provided with connecting members 28 and 29, respectively, in which screws 26 and 27, respectively, are fixed so that they extend in a line with the two rods. The screws 26 and 27 are longitudinally adjustably secured in the connection members 28 and 29, respectively, so that thereby a basic setting or adjustment in the longitudinal direction of the rods 8a and 8b may be put into effect. Alternatively, the rods 8a and 8b may be longitudinally adjustable in the connection members 28 and 29. The screws engage with gear wheels 22 and 23 axially fixed but rotary in the adjustment members 16 and 17 and provided with threaded bores for threaded engagement with the screws 26 and 27. By a suitable selection of thread pitches for the screws 26 and 27 and in the gear wheels 22 and 23, it is possible to realise, in relation to the two adjustment members 16 and 7, counter-directed displacements of the two rods 8a and 8b on rotation of the gear wheels 22 and 23. By such rotation of the gear wheels, the dampers 9 and 10 are displaced from the position illustrated in Fig. 5 to the position illustrated in Fig. 6.

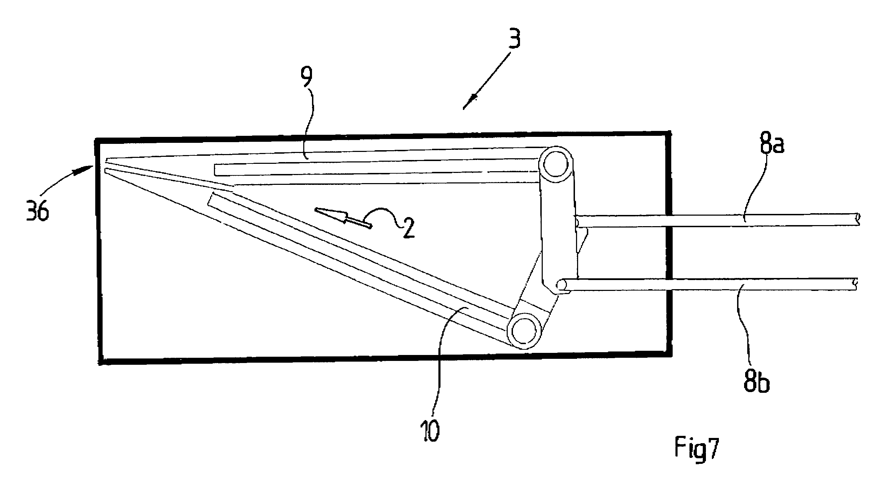

If, instead, the two gear wheels 22 and 23 are rotated in opposite directions, the dampers 9 and 10 will be displaced from the position illustrated in Fig. 5 to the position illustrated in Fig. 7.

In one alternative embodiment, the two connection members 28 and 29 are provided with threaded bores whose longitudinal directions are parallel with the longitudinal directions of the rods 8a and 8b. The screws 26 and 27 are threadingly engaged in these bores. The front ends of the screws are non-rotationally connected to the gear wheels 22 and 23 which, in this embodiment, possess no nut function.

The adjustment positions illustrated in Figs. 6 and 7 are extreme positions, which implies that, for example, the lower damper 10 shown in Fig. 6 is located in the maximum "open position", for which reason it cannot be opened further regardless of how powerful the air current flow 2 becomes. This implies that the rod 8a will not move regardless of how strong the current flow becomes. In order to permit opening of the upper damper 9, the lower rod 8b must however be capable of moving and with this also the lower adjustment member 17.

Fig. 4 shows how the coupling 34 is open and how the connection between the spring 15 and the two adjustment members 16 and 17 is carried into effect with the two arms 32 and 33 as well as the joints 39 and 40. On securement of the upper adjustment member or block 16, the lower adjustment member 17 can still move reciprocally by pivoting of both of the arms 32 and 33.

In order for mutual movements between the two adjustment members 16 and 17 to be possible, the gear wheels 22 and 23 must have such large axial extent that they never disengage from one another. This is illustrated in Fig. 4 where a certain displacement has taken place but where there is still engagement along a considerable length.

It will further be apparent from Fig. 4 that the lower gear wheel 23, via a further gear wheel 30 and a rod 24 with a wheel 25 in its front end, permits rotation of the two gear wheels 22 and 23.

In the embodiment with the screws 26 and 27 non-rotationally secured in the gear wheels 22 and 23, the gear wheel 30 may be dispensed with. Instead, either of the screws extends through its gear wheel to the outside of the casing in which the spring mechanism 4 is housed and there displays a wheel corresponding to the wheel 25 illustrated in Figs. 3 and 4.

In the foregoing, the situation was described where the two dampers 9 and 10 have been pivoted to any of the extreme positions according to Figs. 6 and 7. If a minor oblique inclination of the air current is desirable, it is possible instead to select a smaller relative displacement between the two rods 8a and 8b in that the gear wheels 22 and 23 are rotated a fewer number of turns. In such an adjustment position, the dampers 9 and 10 would then, for example, assume an intermediate position between the position illustrated in Fig. 5 and the position illustrated in Fig. 6.

In an intermediate position in accordance with the foregoing, both of the adjustment members 16 and 17 may still move as a rigid unit with the coupling 34 locked during a certain part of the movements of the dampers 9 and 10, namely up to that point where either of the dampers comes into contact with the duct wall of the nozzle device. When this occurs, the coupling 34 must open so that the adjustment members can be displaced from the position illustrated in Fig. 3 to the position illustrated in Fig. 4 where the coupling 34 is also shown in the open positions.

If the coupling 34 comprises a spring-biased ball that is insertable in a recess 35 at the opposing adjustment member 17, this opening will not take place of itself. Since the spring 15 according to Fig. 4 is laterally displaced, it will exercise a returning force on the adjustment members 16 and 17 so that the coupling 34 may return into engagement as soon as both dampers 9 and 10 are free from the duct walls in the nozzle device 3.

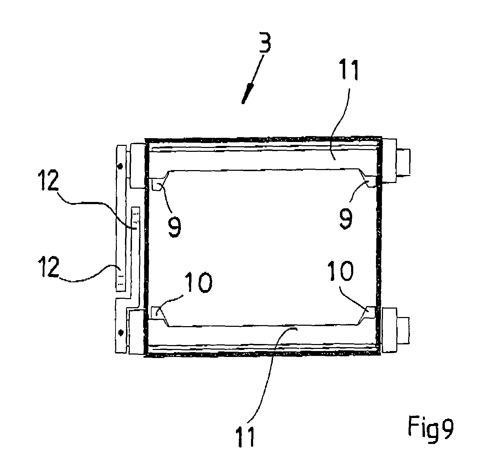

It will be apparent from Fig. 9 that the duct section which includes the dampers 9 and 10 is rectangular in cross section. It will also be apparent how the shafts 11 extend through the walls of the duct section and how the levers 12 are disposed on their outside.

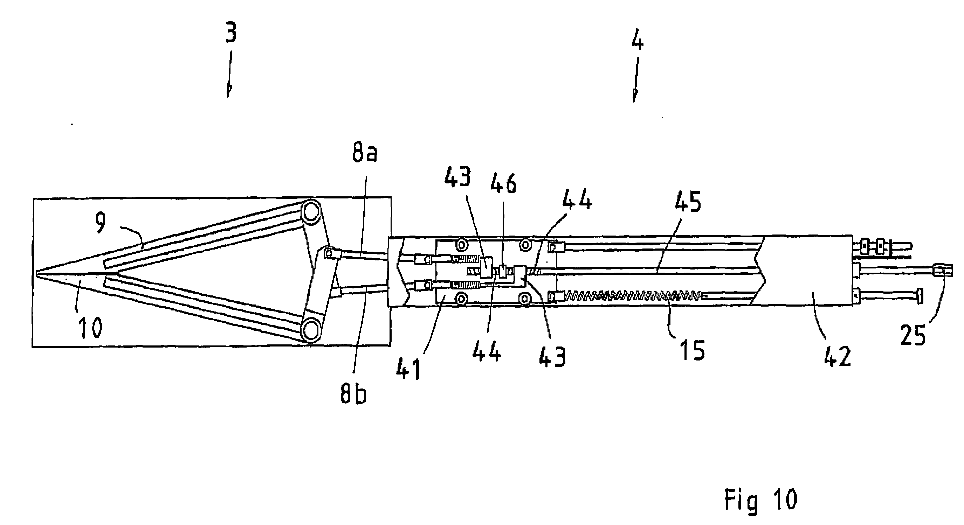

The embodiment according to Figs. 10 to 13 differs from the above-described embodiments regarding the spring mechanism 4, while the nozzle device 3 with its dampers 9 and 10 remains unchanged.

In the embodiment that will now be described, use will be made as far as is possible of the same reference numerals as those employed in the above-described embodiments.

In the embodiment according to Figs. 10 to 13, the rods 8a and 8b included in the linkage 8 are connected to a common adjustment member in the form of a carriage 41 which runs in a guide in the form of a tube 42. The carriage 41 is connected to the one end of a spring 15 which, with its other end, is secured in the tube 42. This securement is adjustable for regulating the spring force that acts on the carriage in the closing direction of the dampers 9 and 10.

In this embodiment, the carriage 41 serves the same function as the mutually rigidly interconnected adjustment members 16 and 17 above (by the intermediary of the coupling 34).

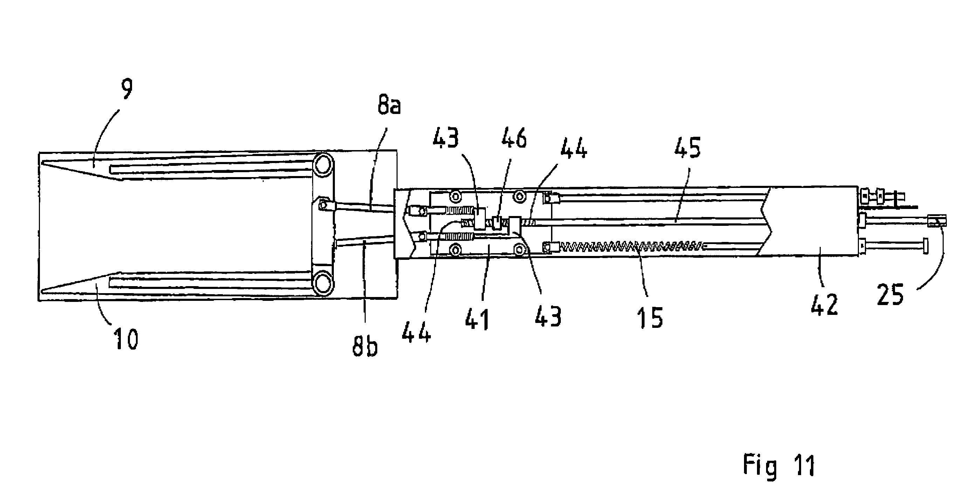

In a comparison between Figs. 10 and 11, it will be apparent that the carriage 41 has moved a distance to the left in Fig. 11, at the same time as the dampers 9 and 10 have assumed their fully open positions. In both Figures, the dampers 9 and 10 are set for straight outward flow from the nozzle device 3, i.e. neither upwardly nor downwardly directed.

In such a comparison, it will also be apparent that, on opening of the dampers 9 and 10, the upper damper 9 will move against the action of force of gravity, while the lower damper 10 will move with the force of gravity. Given that the dampers may be assumed to be alike and they are interconnected int. al. via the rods 8a and 8b as well as the carriage 41, this opposing action of force of gravity will be balanced out so that the function of the nozzle device will be independent, or substantially independent, of its orientation.

Apart from that disclosed in the foregoing, force of gravity will also influence the carriage 41 and the adjustment rod 45 as well as the two rods 8a and 8b. This implies that if the apparatus according to the invention were to slope so that the nozzle device 3 moves (to the left in Figs. 10 and 11), the carriage 41 and the components connected thereto would be actuated in a direction to the left in the Figures, a feature that may quite simply be compensated for by a corresponding increase of the force from the spring 15.

Like that described above, the regulation of the through flow area of the nozzle device 3 takes place by a synchronous movement of the two rods 8a and 8b. In order also to permit adjustment of the flow direction (up and down), the rods must moreover be capable of being set in opposite direction.

In the embodiment under consideration here, this is put into effect in that the rods are provided with nuts 43 which are in threaded engagement with oppositely threaded portions 44 on an adjustment rod 45 with a wheel 25. The adjustment rod 45 has an anchorage 46 by means of which it is axially fixed in relation to the carriage 41. The opposing end portion of the adjustment rod 45 with the wheel 25 is slidable through an aperture in the end wall of the guide 42. It follows that, on rotation of the wheel in one direction, the nuts 43, which are thus connected to the rods 8a and 8b, will approach one another while the reverse applies on an opposite direction of rotation.

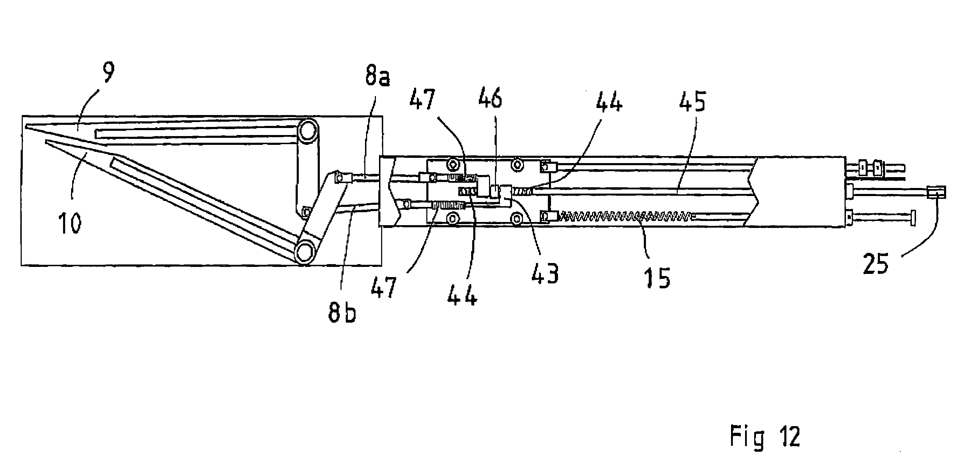

In a comparison between Figs. 10 and 12, which both show the dampers in the closed position, it will be found that, in Fig. 12, the nuts 43 have been moved closer to one another and closely adjacent the anchorage 46. This implies that both of the dampers 9 and 10 have been pivoted upwards so that the nozzle device 3 is now adjusted for upwardly directed flow.

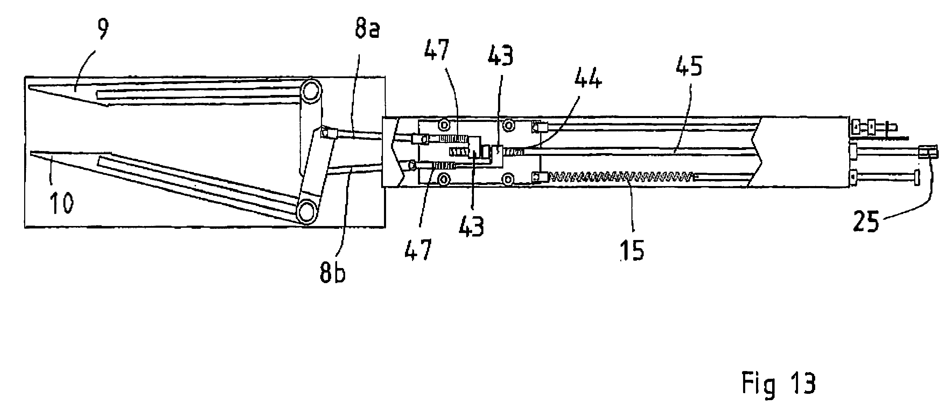

In the foregoing, the openable coupling 34 was described whose purpose is to prevent blocking of the dampers 9 and 10 if one of them were to come into contact with the wall of the duct section. In the embodiment under consideration here, this function has been attained in that there are disposed, between the rods 8a and 8b and the nuts 43, compression springs 47 which are shown in Figs. 12 and 13. In a comparison between these Figures, it will be apparent that the springs 47 have, in the closed position of the dampers (Figs. 12), the same length while the lower spring in Fig. 13 has been compressed together in the open position of the dampers.

## Claims

1. An apparatus for the supply of a governable flow of combustion air to a boiler (7), comprising a fan (6) with governable flow, a conduit connection (5) between the fan and a number of nozzle devices (3) discharging in the interior of the boiler, the devices including at least one adjustable damper (9, 10) for governing the through flow area of the nozzle device, the position of the damper being controlled in response to the pressure generated by the fan in the nozzle device, **characterised in that** the damper (9, 10) is directly affected by the pressure generated by the fan; and that it is movable from a closed position under the action of this pressure against the action of a spring mechanism (15).

2. The apparatus as claimed in Claim 1, **characterised in that** two dampers (9, 10) are disposed in a duct section in the nozzle device (3), where the upstream ends of the dampers are disposed at opposing duct walls, while the downstream ends of the dampers are movable reciprocally in relation to one another and in the closed position abut against one another.

3. The apparatus as claimed in Claim 1 or 2, **characterised in that** the dampers (9, 10) are pivotally suspended each about its shaft (11) in the duct section.

4. The apparatus as claimed in any of Claims 1 to 3, **characterised in that** the dampers (9, 10) are, via a linkage (8), connected to an adjustment member by means of which the closed position is displaceable transversely of the longitudinal direction of the duct section.

5. The apparatus as claimed in Claim 4, **characterised in that** the linkage (8) at least includes two rods (8a, 8b) displaceable in their longitudinal direction and connected to each respective damper (9, 10), the rods also being connected each to their adjustment member (16, 17); that the adjustment members are connected to the spring (15) so as to be displaced synchronously on opening and closing of the dampers, while displacement in opposed directions of the rods in relation to the adjustment members is disposed to realise a displacement of the closed position of the dampers transversely of the longitudinal direction of the duct section.

6. The apparatus as claimed in Claims 4 or 5 **characterised in that** the adjustment member includes a screw arrangement (26, 28; 27, 29; 26, 22; 27, 23) to each displaceable rod (8a, 8b) by means of which screw arrangement the longitudinal position of the displaceable rods in relation to the associated adjustment member (16, 17, respectively) is adjustable.

7. The apparatus as claimed in Claim 5 or 6, **characterised in that** the adjustment members (16, 17) are freely displaceable in the longitudinal direction of the rods (8a, 8b) in relation to guides (18).

8. The apparatus as claimed in any of Claims 5 to 7, **characterised in that** the spring (15) is connected to the adjustment members (16, 17) by the intermediary of coupling devices (32, 33) which are designed to permit mutual relative movements in the longitudinal direction of the rods (8a, 8b) between the adjustment members.

9. The apparatus as claimed in any of Claims 5 to 8, **characterised in that** there is provided, between the adjustment members (16, 17) an openable coupling (34, 35) which, in the locked position, is disposed to cause synchronous movements of the adjustment members but which, in the open position, is disposed to permit different movements of the adjustment members including a stop of one of them.

10. The apparatus as claimed in Claim 9, **characterised in that** the coupling (34, 35) is operative to open when the effect of forces from one of the displaceable rods (8a, 8b) exceeds a given value.

11. The apparatus as claimed in Claim 9 or 10, **characterised in that** the coupling devices (32, 33) are disposed to transfer, from the spring (15) to the adjustment members (16, 17), a returning force when the adjustment members have been displaced in relation to one another.

12. The apparatus as claimed in any of Claims 9 to 11, **characterised in that** the coupling (34, 35) includes a spring biased ball disposed in a bore in the one adjustment member and depressible in a corresponding recess in the other adjustment member positioned such that the adjustment members are, with the ball in engagement, located flush with each other in the longitudinal direction of the rods (8a, 8b).

13. The apparatus as claimed in any of Claims 4 to 12, **characterised in that** the linkage (8) has an anchorage in the adjustment member which is adjustable in the longitudinal direction of the linkage.

14. The apparatus as claimed in any of Claims 5 to 12, **characterised in that** the rods (8a, 8b) display threaded portions (26, 27) which are each accommodated in its gear wheel (22, 23) which are secured in each respective adjustment member (16, 17) such that they are rotary but axially fixed in the longitudinal direction of the rods and which have threaded bores for threaded engagement with the threaded portions.

15. The apparatus as claimed in any of Claims 5 to 12, **characterised in that** there is disposed a gear wheel (22, 23) in each adjustment member (16, 17) such that this gear wheel is rotary but axially fixed; that each gear wheel has a screw (26, 27) which is in threaded engagement with a threaded bore in a coupling device (28, 29) which is longitudinally adjustably secured one on each of the displaceable rods (8a, 8b).

16. The apparatus as claimed in Claim 13 or 14, **characterised in that** the gear wheels (22, 23) are rotationally interconnected.

17. The apparatus as claimed in either of Claims 14 or 15, **characterised in that** the gear wheels (22, 23) are of greater axial length than the largest possible relative movement area for the adjustment members (16, 17).

18. The apparatus as claimed in any of Claims 14 to 16, **characterised in that** each gear wheel (22, 23) is, via a rod (24) and a wheel (25), rotationally adjustable from the outside of a hood or casing in which the adjustment members (16, 17) are housed.

19. The apparatus as claimed in any of Claims 1 to 4, **characterised in that** the linkage (8) includes two rods (8a, 8b) displaceable in their longitudinal directions and each connected to their respective damper (9, 10), the rods also being connected to a common adjustment member which is movable in the longitudinal direction of the rods and is connected to the spring (15).

20. The apparatus as claimed in Claim 19, **characterised in that** the common adjustment member is in the form of a carriage which is guided in a tubular guide.

21. The apparatus as claimed in Claim 19 or 20, **characterised in that** the rods (8a, 8b) are connected to the common adjustment member by the intermediary of a screw/nut arrangement (44, 43) by means of which the rods are displaceable in opposite directions in order to realise a displacement of the closed position of the dampers (9, 10) transversely of the longitudinal direction of the duct section.
